(19) Europäisches Patentamt
European Patent Office
Office européen des brevets

(11) **EP 4 535 269 A1**

## (12) EUROPEAN PATENT APPLICATION

(43) Date of publication:
09.04.2025 Bulletin 2025/15

(51) International Patent Classification (IPC):
**G06Q 30/0201** *(2023.01)* **G06Q 30/0283** *(2023.01)*
**G06Q 50/40** *(2024.01)*

(21) Application number: 24175124.7

(22) Date of filing: **10.05.2024**

(52) Cooperative Patent Classification (CPC):
**G06Q 30/0201; G06Q 30/0283; G06Q 50/40**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **02.10.2023 TW 112137776**

(71) Applicant: **APh ePower Co., Ltd.
Kaohsiung City 821 (TW)**

(72) Inventors:
- HUANG, Yi-Yun
  **Kaohsiung City 821 (TW)**
- SU, Hsiu-Hsien
  **Kaohsiung City 821 (TW)**

(74) Representative: **Becker, Eberhard
Becker Kurig & Partner
Patentanwälte mbB
Bavariastraße 7
80336 München (DE)**

Remarks:
Amended claims in accordance with Rule 137(2) EPC.

(54) **CARBON EMISSION CALCULATION SYSTEM AND CARBON EMISSION CALCULATION METHOD**

(57) A carbon emission calculation system (100, 300) and a carbon emission calculation method are provided. The carbon emission calculation system (100, 300) includes a computing equipment (110, 310) and a detection element (120, 320). The detection element (120, 320) is coupled to the computing equipment (110, 310) and disposed in a mobile vehicle (200). When the detection element (120, 320) detects a user identity, the detection element (120, 320) outputs inbound data to the computing equipment (110, 310), and the computing equipment (110, 310) starts to calculate usage information according to the inbound data. When the detection element (120, 320) detects the user identity again, the detection element (120, 320) outputs outbound data to the computing equipment (110, 310), and the computing equipment (110, 310) finishes calculating the usage information according to the outbound data. The computing equipment (110, 310) calculates a personal carbon emission (CE1, CE2) according to the inbound data, the outbound data, and the usage information.

FIG. 1

**Description**

BACKGROUND OF THE INVENTION

Field of the Invention

The invention relates to a calculation system, and in particular to a carbon emission calculation system and a carbon emission calculation method.

Description of Related Art

Current carbon emission calculations are mostly based on large-scale calculations. However, as internal carbon pricing becomes an important tool for companies to reduce carbon emissions, it is currently impossible to reduce or manage carbon in specific scenarios. For example, it is impossible to automatically calculate the carbon emissions of elevators individually, so it is impossible to effectively use carbon emission information to help companies improve their awareness of carbon reduction or assist with internal carbon pricing.

SUMMARY OF THE INVENTION

The invention provides a carbon emission calculation system and a carbon emission calculation method that may calculate a personal carbon emission.

A carbon emission calculation system of the invention includes a computing equipment and a detection element. The detection element is coupled to the computing equipment and disposed in a mobile vehicle. When the detection element detects a user identity, the detection element outputs inbound data to the computing equipment, and the computing equipment starts to calculate usage information according to the inbound data. When the detection element detects the user identity again, the detection element outputs outbound data to the computing equipment, and the computing equipment finishes calculating the usage information according to the outbound data. The computing equipment calculates a personal carbon emission according to the inbound data, the outbound data, and the usage information.

A carbon emission calculation method of the invention includes the following steps: outputting inbound data to a computing equipment via a detection element disposed at a mobile vehicle when the detection element detects a user identity; starting to calculate usage information according to the inbound data via the computing equipment; outputting outbound data to the computing equipment via the detection element when the detection element detects the user identity again; finishing calculating the usage information according to the outbound data via the computing equipment; and calculating a personal carbon emission according to the inbound data, the outbound data, and the usage information via the computing equipment.

Based on the above, the carbon emission calculation system and the carbon emission calculation method of the invention may calculate the personal carbon emission of the user riding on the mobile vehicle.

In order to make the aforementioned features and advantages of the disclosure more comprehensible, embodiments accompanied with figures are described in detail below.

BRIEF DESCRIPTION OF THE DRAWINGS

FIG. 1 is a schematic diagram of a carbon emission calculation system according to an embodiment of the invention.
FIG. 2 is a flowchart of a carbon emission calculation method according to an embodiment of the invention.
FIG. 3 is a schematic diagram of a carbon emission calculation system according to another embodiment of the invention.

DESCRIPTION OF THE EMBODIMENTS

Reference will now be made in detail to the exemplary embodiments of the invention, and examples of the exemplary embodiments are illustrated in the accompanying drawings. Wherever possible, the same reference numerals are used in the figures and the descriptions to refer to the same or similar portions.

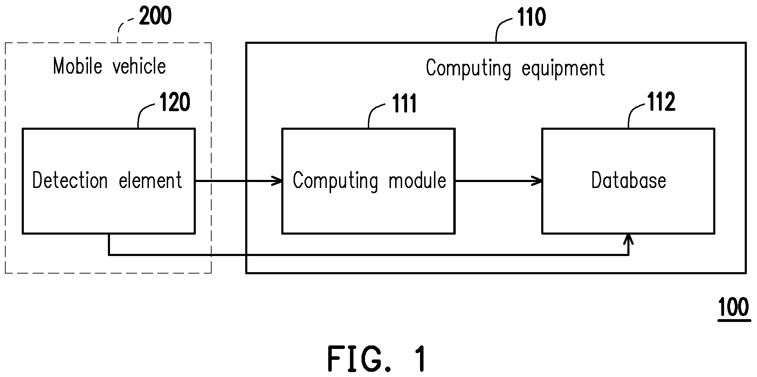

FIG. 1 is a schematic diagram of a carbon emission calculation system according to an embodiment of the invention. Referring to FIG. 1, a carbon emission calculation system 100 includes a computing equipment 110 and a detection element 120. The computing equipment 110 may be coupled to the detection element 120 in a wired or wireless manner. In the present embodiment, the detection element 120 may be disposed in a mobile vehicle 200 to record inbound data and outbound data of a user boarding and leaving the mobile vehicle. The computing equipment 110 may calculate personal carbon emission according to the inbound data and the outbound data of the user boarding and leaving the mobile vehicle. The computing equipment 110 may be implemented as a remote monitoring host or a cloud server, for example, and the invention is not limited thereto. The mobile vehicle 200 may be, for example, a vehicle such as an elevator equipment, an escalator, a bus or various automobiles, and the like.

In the present embodiment, the computing equipment 110 includes a computing module 111 and a database 112. The computing module 111 may, for example, include a central processing unit (CPU), or other programmable general-purpose or special-purpose microprocessors, digital signal processors (DSPs), application-specific integrated circuits (ASICs), programmable logic devices (PLDs), or other similar processing circuits, or a combination of the devices. In the present embodiment, the database 112 may include a memory. The detection element 120 may be a sensing and/or physical detection element, such as various identity verification machines.

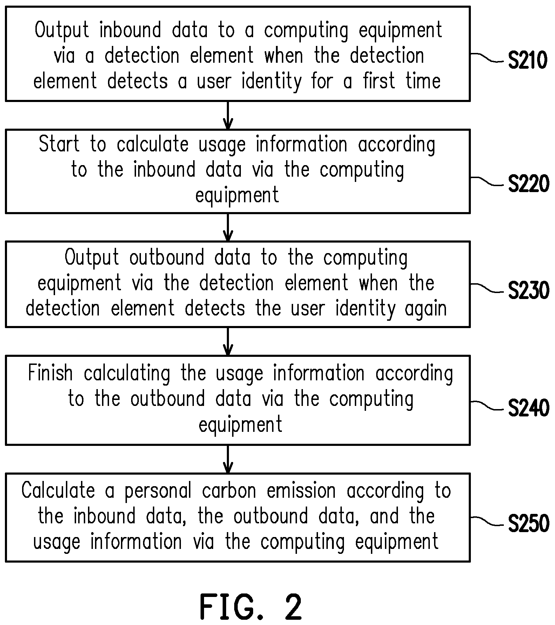

FIG. 2 is a flowchart of a carbon emission calculation method according to an embodiment of the invention. Referring to FIG. 1 and FIG. 2, the carbon emission calculation system 100 may perform the following steps S210 to S250. In the present embodiment, the mobile vehicle 200 may be an elevator equipment, and a user (e.g., a company employee) may ride on the elevator equipment. In step S210, when the detection element 120 detects a user identity for the first time, the detection element 120 may output inbound data to the computing equipment 111. The inbound data may be starting floor information. In step S220, the computing equipment 111 may start to calculate usage information according to the inbound data. In step S230, when the detection element 120 detects the user identity again, the detection element 120 may output outbound data to the computing equipment 111. The outbound data may be arrival floor information. In step S240, the computing equipment 111 may finish calculating the usage information according to the outbound data. In step S250, the computing equipment 111 may calculate a personal carbon emission according to the inbound data, the outbound data, and the usage information.

In an embodiment, the usage information may include the usage time of the user riding the mobile vehicle 200. The computing equipment 111 may calculate personal carbon emission according to the power parameter, the usage time, and the electric power carbon emission coefficient corresponding to the mobile vehicle 200, wherein the computing equipment 111 may obtain a personal carbon emission CE1 by calculating the following equation (1). In formula (1), P is the power parameter (unit: Watt) (known parameter) of the elevator equipment. t is the usage time of the mobile vehicle 200. EF is the electric power carbon emission coefficient (unit: carbon emission/kWh) (known parameter) of the elevator equipment. It should be noted that, the electric power carbon emission coefficient may be determined according to the amount of carbon dioxide ($CO_2$) emitted per kilowatt-hour of electricity generated by different power generation methods and energy sources, and the invention is not limited thereto.

$$CE1 = P \times t \times EF \ldots\ldots\ldots\ldots equation\ (1)$$

For example, when the user enters the elevator equipment and checks in via the detection element 120, the computing equipment 111 may obtain inbound data and start to calculate the usage (ride) time. When the user leaves the elevator equipment and checks out via the detection element 120, the computing equipment 111 may obtain outbound data and finish calculating the usage time. Therefore, the computing equipment 111 may calculate the personal carbon emission according to the above equation (1).

In addition, in another embodiment, the usage information may also include the electric power consumption record of the mobile vehicle 200. The computing equipment 111 may calculate the personal carbon emission according to the electric power consumption record and the electric power carbon emission coefficient corresponding to the mobile vehicle 200, wherein the computing equipment 111 may obtain a personal carbon emission CE2 by calculating the following equation (2). In equation (2), ER is the elevator energy consumption data (unit: kilowatt hours) obtained via an electric power consumption recording element.

$$CE2 = ER \times EF \ldots\ldots\ldots\ldots equation\ (2)$$

For example, after the user enters the elevator equipment (the mobile vehicle 200) and checks in via the detection element 120, the computing equipment 111 may obtain inbound data and start to calculate the electric power consumption. When the user leaves the elevator equipment and checks out via the detection element 120, the computing equipment 111 may obtain outbound data and finish calculating the electric power consumption. Therefore, the computing equipment 111 may calculate the personal carbon emission according to the above equation (2).

In another embodiment, when the detection element 120 detects a plurality of user identities, the computing equipment 111 may calculate the total carbon emission of the mobile vehicle according to the maximum usage information. Moreover, the computing equipment 111 may calculate average carbon emissions per person (i.e., personal carbon emissions) of different floors according to a plurality of inbound data and a plurality of outbound data corresponding to these user identities.

For example, it is assumed that N people enter the elevator on floor m0 and want to arrive at floor m1. It is assumed that K people enter the elevator on floor m0 and want to arrive at floor m2. It is assumed that I people enter the elevator on floor m0 and want to arrive at floor m3 (m3>m2>m1>m0). The computing equipment 111 may divide the total carbon emission of the elevator equipment from floor m0 to floor m1 by N to obtain the average carbon emission per person of N people. The computing equipment 111 may divide the total carbon emission of the elevator equipment from floor m0 to floor m1 by N, and add the result of dividing the total carbon emission of the elevator equipment from floor m1 to floor m2 by K to obtain the average carbon emission per person of K people. The computing equipment 111 may divide the total carbon emission of the elevator equipment from floor m0 to floor m1 by N, and add the result of dividing the total carbon emission of the elevator equipment from floor m1 to floor m2 by K, and then add the result of dividing the total carbon emission of the elevator equipment from floor m2 to floor m3 by I, to obtain the average carbon emission per person of I people. Therefore, the computing equipment 111 may calculate the average carbon emission per person of each floor accordingly. Moreover, examples of different numbers of people and different floors may be deduced in the same way.

For another example, it is assumed that 5 people enter the elevator on the 1st floor, 3 people want to reach the 5th floor, and 2 people want to reach the 7th floor. Taking the personal carbon emission of reaching the highest floor (the 7th floor) as an example, the computing equipment 111 may add the result of dividing the total carbon emission of the elevator equipment from the 1st floor to the 5th floor by 5 and the result of dividing the total carbon emission of the elevator equipment from the 5th floor to the 7th floor by 5 to obtain the personal carbon emissions of the two people who arrive on the 7th floor. The personal carbon emissions of other floors may be deduced similarly.

For another example, it is assumed that 5 people enter the elevator on the first floor, 3 people want to arrive on the 5th floor, 2 people want to arrive on the 7th floor, and when they arrive on the 3rd floor, 2 more people come in and want to go to the 5th floor. Taking the personal carbon emission of reaching the highest floor (the 7th floor) as an example, the computing equipment 111 may add the result of dividing the total carbon emission of the elevator equipment from the 1st floor to the 3rd floor by 5, the result of dividing the total carbon emission of the elevator equipment from the 3rd floor to the 5th floor by 7, and the result of dividing the total carbon emission of the elevator equipment from the 5th floor to the 7th floor by 2 to obtain the personal carbon emissions of the two people who arrive on the 7th floor. The personal carbon emissions of other floors may be deduced similarly.

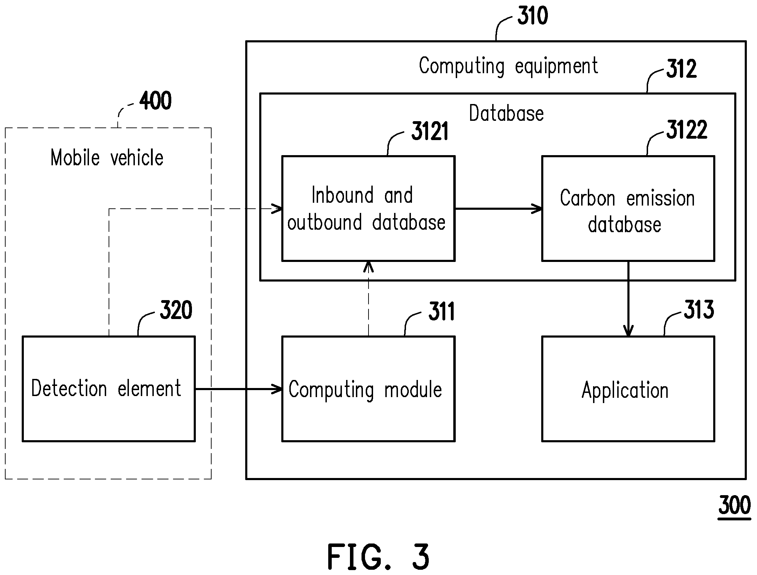

FIG. 3 is a schematic diagram of a carbon emission calculation system according to another embodiment of the invention. Referring to FIG. 3, a carbon emission calculation system 300 includes a computing equipment 310 and a detection element 320. The computing equipment 310 may be coupled to the detection element 320 in a wired or wireless manner. In the present embodiment, the detection element 320 may be disposed in the mobile vehicle 200 to record inbound data and outbound data of a user boarding and leaving the mobile vehicle. In the present embodiment, the computing equipment 310 includes a computing module 311 and a database 312. The database 312 is coupled to the computing module 311. The computing module 311 may calculate personal carbon emission according to the inbound data and the outbound data of the user boarding and leaving the mobile vehicle. The computing module 311 may execute the method as shown in the embodiments of FIG. 1 and FIG. 2 to calculate personal carbon emission and/or carbon emissions of a plurality of people.

In the present embodiment, the computing module 311 may record the inbound data and the outbound data to an inbound and outbound database 3121 in the database 312 and record personal carbon emission and/or carbon emissions of a plurality of people into the carbon emission database 3122 in the database. In the present embodiment, the computing module 311 may execute an application 313, so that the application 313 displays information of personal carbon emission and/or carbon emissions of a plurality of people by reading the database 312. Or, in an embodiment, the application 313 may perform relevant analysis and calculations according to information of personal carbon emission and/or carbon emissions of a plurality of people to generate corresponding carbon emission assessments or recommendations, and the invention is not limited thereto. The application 313 may also be used to display information of personal carbon emission and/or carbon emissions of a plurality of people via a specific user interface, and/or the user may perform the query function of information of the above related carbon emission using the application 313.

Based on the above, the carbon emission calculation system and the carbon emission calculation method of the invention may calculate information of the carbon emission generated by each user when riding the mobile vehicle, and record the relevant information into the database to, for example, provide enterprises or individuals with access to facilitate carbon management and/or carbon pricing. The carbon emission calculation system and the carbon emission calculation method of the invention may obtain personal carbon emission and/or carbon emissions of a plurality of people to facilitate the formulation of carbon reduction strategies (i.e. carbon management), or for an application such as the collection of internal carbon prices (i.e. carbon pricing).

## Claims

1. A carbon emission calculation system (100, 300), comprising:

   a computing equipment (110, 310); and
   a detection element (120, 320) coupled to the computing equipment (110, 310) and disposed in a mobile vehicle (200),
   wherein when the detection element (120, 320) detects a user identity, the detection element (120, 320) outputs inbound data to the computing equipment (110, 310), and the computing equipment (110, 310) starts to calculate usage information according to the inbound data,
   wherein when the detection element (120, 320) detects the user identity again, the detection element (120, 320) outputs outbound data to the computing equipment (110, 310), and the computing equipment (110, 310) finishes calculating the usage information according to the outbound data,

wherein the computing equipment (110, 310) calculates a personal carbon emission (CE1, CE2) according to the inbound data, the outbound data, and the usage information.

2. The carbon emission calculation system (100, 300) of claim 1, wherein the usage information comprises a usage time, and the computing equipment (110, 310) calculates the personal carbon emission (CE1, CE2) according to a power parameter, the usage time, and an electric power carbon emission coefficient corresponding to the mobile vehicle (200).

3. The carbon emission calculation system (100, 300) of claim 1, wherein the usage information comprises an electric power consumption record, and the computing equipment (110, 310) calculates the personal carbon emission (CE1, CE2) according to the electric power consumption record and an electric power carbon emission coefficient.

4. The carbon emission calculation system (100, 300) of claim 1, wherein the computing equipment (110, 310) comprises:

   a computing module (111, 311) coupled to the detection element (120, 320); and
   a database (112, 312) coupled to the computing module (111, 311),
   wherein the computing module (111, 311) records the inbound data, the outbound data, and the personal carbon emission (CE1, CE2) into the database (112, 312), and the computing module (111, 311) executes an application (313) so that the application (313) displays information of the personal carbon emission (CE1, CE2) by reading the database (112, 312).

5. The carbon emission calculation system (100, 300) of claim 1, wherein the mobile vehicle (200) is an elevator equipment.

6. The carbon emission calculation system (100, 300) of claim 5, wherein the inbound data is starting floor information, and the outbound data is arrival floor information.

7. The carbon emission calculation system (100, 300) of claim 5, wherein when the detection element (120, 320) detects a plurality of user identities, the computing equipment (110, 310) calculates a total carbon emission of the mobile vehicle (200) according to maximum usage information, and calculates average carbon emissions per person of different floors according to a plurality of inbound data and a plurality of outbound data corresponding to the user identities.

8. A carbon emission calculation method, comprising:

   outputting inbound data to a computing equipment (110, 310) via a detection element (120, 320) disposed at a mobile vehicle (200) when the detection element (120, 320) detects a user identity;
   starting to calculate usage information according to the inbound data via the computing equipment (110, 310);
   outputting outbound data to the computing equipment (110, 310) via the detection element (120, 320) when the detection element (120, 320) detects the user identity again;
   finishing calculating the usage information according to the outbound data via the computing equipment (110, 310); and
   calculating a personal carbon emission (CE1, CE2) according to the inbound data, the outbound data, and the usage information via the computing equipment (110, 310).

9. The carbon emission calculation method of claim 8, wherein the usage information comprises usage time, and the step of calculating the personal carbon emission (CE1, CE2) comprises:
   calculating the personal carbon emission (CE1, CE2) according to a power parameter, the usage time, and an electric power carbon emission coefficient corresponding to the mobile vehicle (200) via the computing equipment (110, 310).

10. The carbon emission calculation method of claim 8, wherein the usage information comprises an electric power consumption record, and the step of calculating the personal carbon emission (CE1, CE2) comprises:
    calculating the personal carbon emission (CE1, CE2) according to the electric power consumption record and an electric power carbon emission coefficient via the computing equipment (110, 310).

11. The carbon emission calculation method of claim 8, wherein the computing equipment (110, 310) comprises a computing module (111, 311) and a database (112, 312), and the carbon emission calculation method further comprises:

    recording the inbound data, the outbound data, and the personal carbon emission (CE1, CE2) into the database (112, 312) via the computing module (111, 311); and
    making an application (313) display information of the personal carbon emission (CE1, CE2) by reading the database (112, 312) by executing the application (313) via the computing module (111, 311).

**12.** The carbon emission calculation method of claim 8, wherein the mobile vehicle (200) is an elevator equipment.

**13.** The carbon emission calculation method of claim 12, wherein the inbound data is starting floor information, and the outbound data is arrival floor information.

**14.** The carbon emission calculation method of claim 12, further comprising:

calculating a total carbon emission of the mobile vehicle (200) according to maximum usage information via the computing equipment (110, 310) when the detection element (120, 320) detects a plurality of user identities; and calculating average carbon emissions per person of different floors according to a plurality of inbound data and a plurality of outbound data corresponding to the user identities via the computing equipment (110, 310).

**Amended claims in accordance with Rule 137(2) EPC.**

**1.** A carbon emission calculation system (100, 300), comprising:

a computing equipment (110, 310); and a detection element (120, 320) coupled to the computing equipment (110, 310) and disposed in a mobile vehicle (200), wherein when the detection element (120, 320) detects a user identity, the detection element (120, 320) outputs inbound data to the computing equipment (110, 310), and the computing equipment (110, 310) starts to calculate usage information according to the inbound data, wherein when the detection element (120, 320) detects the user identity again, the detection element (120, 320) outputs outbound data to the computing equipment (110, 310), and the computing equipment (110, 310) finishes calculating the usage information according to the outbound data, wherein the computing equipment (110, 310) calculates a personal carbon emission (CE1, CE2) according to the inbound data, the outbound data, and the usage information, wherein the carbon emission calculation system is **characterized in that** the mobile vehicle (200) is an elevator equipment, the inbound data is starting floor information, and the outbound data is arrival floor information, when the detection element (120, 320) detects a plurality of user identities, the computing equipment (110, 310) calculates a total carbon emission of the mobile vehicle (200) according to maximum usage information, and calculates average carbon emissions per person of different floors according to a plurality of inbound data and a plurality of outbound data corresponding to the user identities.

**2.** The carbon emission calculation system (100, 300) of claim 1, wherein the usage information comprises a usage time, and the computing equipment (110, 310) calculates the personal carbon emission (CE1, CE2) according to a power parameter, the usage time, and an electric power carbon emission coefficient corresponding to the mobile vehicle (200).

**3.** The carbon emission calculation system (100, 300) of claim 1, wherein the usage information comprises an electric power consumption record, and the computing equipment (110, 310) calculates the personal carbon emission (CE1, CE2) according to the electric power consumption record and an electric power carbon emission coefficient.

**4.** The carbon emission calculation system (100, 300) of claim 1, wherein the computing equipment (110, 310) comprises:

a computing module (111, 311) coupled to the detection element (120, 320); and a database (112, 312) coupled to the computing module (111, 311), wherein the computing module (111, 311) records the inbound data, the outbound data, and the personal carbon emission (CE1, CE2) into the database (112, 312), and the computing module (111, 311) executes an application (313) so that the application (313) displays information of the personal carbon emission (CE1, CE2) by reading the database (112, 312).

**5.** A carbon emission calculation method, comprising:

outputting inbound data to a computing equipment (110, 310) via a detection element (120, 320) disposed at a mobile vehicle (200) when the detection element (120, 320) detects a user identity; starting to calculate usage information according to the inbound data via the computing equipment (110, 310); outputting outbound data to the computing equipment (110, 310) via the detection element (120, 320) when the detection element (120, 320) detects the user identity again; finishing calculating the usage information according to the outbound data via the computing equipment (110, 310); and

calculating a personal carbon emission (CE1, CE2) according to the inbound data, the outbound data, and the usage information via the computing equipment (110, 310),

wherein the carbon emission calculation method is **characterized in that**

the mobile vehicle (200) is an elevator equipment,

the inbound data is starting floor information, and the outbound data is arrival floor information, and

the carbon emission calculation method further comprises:

calculating a total carbon emission of the mobile vehicle (200) according to maximum usage information via the computing equipment (110, 310) when the detection element (120, 320) detects a plurality of user identities; and

calculating average carbon emissions per person of different floors according to a plurality of inbound data and a plurality of outbound data corresponding to the user identities via the computing equipment (110, 310).

6.  The carbon emission calculation method of claim 5, wherein the usage information comprises usage time, and the step of calculating the personal carbon emission (CE1, CE2) comprises:
    calculating the personal carbon emission (CE1, CE2) according to a power parameter, the usage time, and an electric power carbon emission coefficient corresponding to the mobile vehicle (200) via the computing equipment (110, 310).

7.  The carbon emission calculation method of claim 5, wherein the usage information comprises an electric power consumption record, and the step of calculating the personal carbon emission (CE1, CE2) comprises:
    calculating the personal carbon emission (CE1, CE2) according to the electric power consumption record and an electric power carbon emission coefficient via the computing equipment (110, 310).

8.  The carbon emission calculation method of claim 5, wherein the computing equipment (110, 310) comprises a computing module (111, 311) and a database (112, 312), and the carbon emission calculation method further comprises:

    recording the inbound data, the outbound data, and the personal carbon emission (CE1, CE2) into the database (112, 312) via the computing module (111, 311); and

making an application (313) display information of the personal carbon emission (CE1, CE2) by reading the database (112, 312) by executing the application (313) via the computing module (111, 311).

```
┌ ─ ─ ─ ─ ─ ─200─ ─ ─ ─ ─ ─ ┐        ┌─────────────110──────────────┐
│        Mobile vehicle      │        │      Computing equipment      │
│                   ┌120     │        │    ┌111            ┌112       │
│    ┌──────────────┐        │        │  ┌──────────┐   ┌──────────┐  │
│    │              │        │        │  │          │   │          │  │
│    │  Detection   │        │        │  │ Computing│   │ Database │  │
│    │   element    │        │        │  │  module  │   │          │  │
│    │              │        │        │  │          │   │          │  │
│    └──────────────┘        │        │  └──────────┘   └──────────┘  │
└ ─ ─ ─ ─ ─ ─ ─ ─ ─ ─ ─ ─ ─ ┘        └───────────────────────────────┘
```

100

FIG. 1

S210 Output inbound data to a computing equipment via a detection element when the detection element detects a user identity for a first time

S220 Start to calculate usage information according to the inbound data via the computing equipment

S230 Output outbound data to the computing equipment via the detection element when the detection element detects the user identity again

S240 Finish calculating the usage information according to the outbound data via the computing equipment

S250 Calculate a personal carbon emission according to the inbound data, the outbound data, and the usage information via the computing equipment

FIG. 2

FIG. 3

EP 4 535 269 A1

Europäisches
Patentamt

European
Patent Office

Office européen
des brevets

# EUROPEAN SEARCH REPORT

Application Number

EP 24 17 5124

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/122172 A1 (NGUYEN THUY NGOC [PL] ET AL) 21 April 2022 (2022-04-21) * figures 1-5 * * paragraphs [0002] - [0006], [0022] - [0071] * | 1-14 | INV. G06Q30/0201 G06Q30/0283 G06Q50/40 |
| X | US 2020/284600 A1 (OLIVER GOMILA DAVID [CA] ET AL) 10 September 2020 (2020-09-10) * figures 1-13B * * paragraphs [0005] - [0012], [0034] - [0102] * | 1-14 | |
| A | JP 2006 058942 A (SONY CORP) 2 March 2006 (2006-03-02) * paragraphs [0020], [0030] - [0032] * | 5,6,12, 13 | |
| A | JP 5 145154 B2 (SUPER WAVE CORP) 13 February 2013 (2013-02-13) * abstract * * paragraph [0067] * | 7,14 | |

TECHNICAL FIELDS SEARCHED (IPC)

G06Q

The present search report has been drawn up for all claims

| Place of search | Date of completion of the search | Examiner |
|---|---|---|
| The Hague | 24 May 2024 | Meijs, Koen |

EPO FORM 1503 03.82 (P04C01)

## ANNEX TO THE EUROPEAN SEARCH REPORT
## ON EUROPEAN PATENT APPLICATION NO.

EP 24 17 5124

This annex lists the patent family members relating to the patent documents cited in the above-mentioned European search report.
The members are as contained in the European Patent Office EDP file on
The European Patent Office is in no way liable for these particulars which are merely given for the purpose of information.

24-05-2024

| Patent document cited in search report | Publication date | Patent family member(s) | | Publication date |
|---|---|---|---|---|
| US 2022122172 A1 | 21-04-2022 | NONE | | |
| US 2020284600 A1 | 10-09-2020 | CA | 3132053 A1 | 10-09-2020 |
| | | CN | 113557539 A | 26-10-2021 |
| | | EP | 3935585 A1 | 12-01-2022 |
| | | US | 2020284600 A1 | 10-09-2020 |
| | | WO | 2020176960 A1 | 10-09-2020 |
| JP 2006058942 A | 02-03-2006 | NONE | | |
| JP 5145154 B2 | 13-02-2013 | JP | 5145154 B2 | 13-02-2013 |
| | | JP | 2010033394 A | 12-02-2010 |

EPO FORM P0459

For more details about this annex : see Official Journal of the European Patent Office, No. 12/82